# EUROPÄISCHE PATENTANMELDUNG

(11) **EP 1 302 100 A2**
(43) Veröffentlichungstag der Anmeldung: **16.04.2003**
(21) Anmeldenummer: 02022838.3
(22) Anmeldetag: 14.10.2002
(51) Int. Cl.: A01J 5/017, A01K 1/12, A01J 7/04

(54) **Vorrichtung und Verfahren zum Behandeln eines Euters**

(30) Priorität: 12.10.2001 DE 10150500
(71) Anmelder: Westfalia Landtechnik GmbH, 59302 Oelde (DE)
(72) Erfinder: Mader, Thomas, 33378 Rheda-Wiedenbrück (DE); Kimm, Kurt, 33332 Gütersloh (DE)
(74) Vertreter: Grünecker, Kinkeldey, Stockmair & Schwanhäusser Anwaltssozietät

(57) **Zusammenfassung**

Die vorliegende Erfindung liegt auf dem Gebiet des Melkens von Tieren und betrifft eine Vorrichtung zum Behandlungseinrichtung eines Euters, die in Wirklage mit einem Euter eines zu melkenden Tieres bringbar ist. Die Vorrichtung Behandeln eines Euters umfasst zum eine Behandlungseinrichtung, die an einem Träger angeordnet ist und eine Antriebseinrichtung, die auf den Träger einwirkt. Die Behandlungseinrichtung ist mit dem Träger von einer Ausgangslage in eine Wirklage, in welcher die Behandlungseinrichtung wirksam ist, bewegbar. Ein Sensor erkennt ein Hindernis, das die Bewegung des Trägers (4) zwischen der Ausgangslage und der Endlage behindert und gibt ein Signal ab, welches das Vorhandensein eines Hindernisses anzeigt. Eine das Signal empfangende Auswerteeinrichtung wirkt auf die Antriebseinrichtung ein, um für das Tier schmerzhafte Stöße mit der Vorrichtung zu vermeiden.

## Beschreibung

Die vorliegende Erfindung liegt auf dem Gebiet des Melkens von Tieren, insbesondere von Kühen. Insbesondere betrifft die vorliegende Erfindung das Behandeln von Eutern zu melkender Tiere.

Unter "Behandeln" werden hier die das Melken vorbereitenden Schritte verstanden, wie z.B. das Reinigen und gegebenenfalls das Desinfizieren oder auch das Stimulieren des Euters vor dem Melken. So wird in der Regel vor dem Melken das Euter des zu melkenden Tieres vorbehandelt, indem z.B. das Euter gereinigt wird. Ebenso umfasst der Begriff "Behandeln" im Sinne dieser Anmeldung die z.B. separate Behandlung des Euters nach dem Melken. Dazu kann eine eventuelle nochmalige Reinigung gehören oder die Auftragung eins Desinfektions- und/oder Pflegemittels auf die Zitzen oder das Euter insgesamt.

Bei einer im Stand der Technik bekannten Reinigungsvorrichtung zur Behandlung des Euters wird eine an dem freien Ende eines beweglichen Trägers drehbar gelagerte zylindrische Bürste von einer Ausgangslage in eine Endlage, in der die Bürste in Wirklage mit dem Euter ist, verfahren. Wenn der Träger vollständig ausgefahren ist und die Bürste sich in der Endlage befindet, wird die Bürste drehend angetrieben, um die Zitzen und das Euter insgesamt zu reinigen. Nach Beendigung des Reinigungsvorganges wird der Träger mit der Bürste in die Ausgangslage zurückverfahren. Dort kann die Bürste selbst gereinigt und desinfiziert werden.

Bei konventionellen Behandlungs- und insbesondere Reinigungsvorrichtungen wird der Träger einfach in die Reinigungslage verfahren. Die Bewegung der Reinigungsvorrichtung in Reinigungslage ohne Kollision mit den Beinen des zu melkenden Tieres wird dadurch erschwert, dass die Tiere frei stehen und in der Reinigungsposition normalerweise nicht fixiert sind, so dass sich das Tier insgesamt und insbesondere die Tierbeine im Verfahrbereich der Reinigungseinrichtung befinden können.

Um den Bewegungsspielraum der Tiere wenigstens in einer Dimension einzuschränken, bedient man sich im Stand der Technik eines Bodenrostes, den die zu reinigenden Tiere als Standfläche meiden. Der Bodenrost gibt jedoch lediglich einen minimalen Querabstand der Beine vor. Die Position der Beine in Längsrichtung des Tieres wird nicht beeinflusst, so dass es bei dem Verfahren der Reinigungsbürste dennoch zu Zusammenstößen mit den Tierbeinen kommen kann. Solche Zusammenstöße können sehr schmerzhaft für das Tier sein und auch Verletzungen hervorrufen. Ein (zurück-) tretendes Tier oder eines das daraufhin in Panik gerät, kann außerdem großen Schaden an der Reinigungsbürste und -einrichtung und den sonstigen Gerätschaften am Melkstand verursachen.

Zusammenstöße mit den Tierbeinen können bei einer Reinigungsanlage nicht nur beim Verfahren der Reinigungsbürste in Reinigungslage vorkommen, sondern auch beim Zurückfahren aus der Reinigungslage in die Ruhelage. Deshalb ist die mögliche Unfallgefahr und das Gefährdungs- und Schadenspotential an Tier und Reinigungsmaschine deutlich höher als bei Vorrichtungen zur automatischen Zitzenortung oder zum automatischen Ansetzen der Melkbecher, da sich bei diesen ein Trägerarm nur während der Ortung bzw. des Ansetzens in Tiernähe unterhalb des Tieres befindet. Die Abnahme der Melkbecher erfolgt hingegen üblicherweise nicht durch den Trägerarm, sondern durch Abschaltung des Unterdruckes und anschließendes Einziehen des Milchschlauches. Deshalb ist der Träger- oder Roboterarm bei solchen Vorrichtungen nur während einer kurzen Zeitdauer dem Kollisionsrisiko und dem Gefährdungspotential durch das Tier ausgesetzt.

Der vorliegenden Erfindung liegt das Problem zugrunde, eine verbesserte Vorrichtung der eingangs genannten Art vorzuschlagen. Der vorliegenden Erfindung liegt insbesondere das Problem zugrunde, eine Vorrichtung zur Reinigung des Euters von zu melkenden Tieren vorzuschlagen, die frei in der Reinigungsstation stehen, d.h. die nicht in der Reinigungsstation fixiert sind.

Erfindungsgemäß wird diese Aufgabe durch eine Vorrichtung mit den Merkmalen des Anspruchs 1 und durch ein Verfahren mit den Merkmalen des Anspruchs 13 gelöst. Bevorzugte Weiterbildungen sind Gegenstand der Unteransprüche.

Die erfindungsgemäße Vorrichtung umfasst wenigstens eine Behandlungseinrichtung und wenigstens einen die Behandlungseinrichtung tragenden Träger und wenigstens eine auf den Träger wirkende Antriebseinrichtung. Die Behandlungseinrichtung ist mit dem Träger von einer Ausgangslage in eine Wirklage, in welcher die Behandlungseinrichtung wirksam ist, bewegbar. Wenigstens ein Sensor gibt ein Signal ab, wenn ein Hindernis die Bewegung des Trägers zwischen der Ausgangslage und der Endlage behindert. Das Signal zeigt dann das Vorhandensein eines Hindernisses an. Eine Auswerteeinrichtung empfängt das Signal und wirkt auf die Antriebseinrichtung ein.

Das erfindungsgemäße Verfahren zum Behandeln eines Euters eines zu melkenden Tieres wird mit einer Behandlungseinrichtung durchgeführt, die mittels einer Antriebseinrichtung von einer Ausgangslage, welche sich z.B. neben dem Tier befindet, in eine Wirklage verfahren wird, um das Euter des zu melkenden Tieres zu behandeln. Wenn sich in der Bewegungsbahn des Trägers zwischen der Ausgangslage und der Wirklage ein Hindernis befindet, wird dieses mit einem Sensor detektiert. Der Sensor gibt ein Signal ab, welches das Vorhandensein eines Hindernisses anzeigt. Dieses Signal wird von einer Auswerteeinrichtung aufgenommen und ausgewertet, woraufhin auf die Antriebseinrichtung eingewirkt wird, um Stöße zu vermeiden, die für ein Tier schmerzhaft oder gefährlich sind.

Die erfindungsgemäße Vorrichtung und das erfindungsgemäße Verfahren haben viele Vorteile.

Ein Unterschied zu bekannten automatischen Systemen zur Zitzenortung oder Melkbecheransetzung ist beispielsweise, dass bei einer erfindungsgemäßen Behandlungseinrichtung eine Kollision vermieden werden soll, während bei einer automatischen Zitzenortung gerade ein Kontakt gesucht wird. Daraus ergeben sich unterschiedliche Anforderungen und Zielsetzungen an die Genauigkeit und auch die Stabilität der Vorrichtung. Zitzenortungssysteme müssen die Zitzen mit bekannten Zitzenformen präzise und zielgenau erkennen und ansteuern. Eine Behandlungsvorrichtung muss hingegen unterschiedlich geformte Hindernisse zuverlässig erkennen und für ein Tier schmerzhafte oder starke Zusammenstöße vermeiden.

Mit der erfindungsgemäßen Vorrichtung wird ein Hindernis erkannt und bei Erkennen eines Hindernisses auf die Bewegung des Trägers Einfluss genommen. Hierbei kann die Bewegung des Trägers z.B. gestoppt werden, um erst dann mit der Vorwärtsbewegung in die Wirk- oder Behandlungslage fortzufahren, wenn das Hindernis aus der Bewegungsbahn der Einrichtung entfernt worden ist. Beispielsweise kann das Hindernis durch ein Tierbein gebildet worden sein. Die Behandlungseinrichtung wird in einem solchen Fall nur dann in Wirklage verfahren, wenn das Tier sein Bein aus der Bewegungsbahn der Einrichtung z.B. weggezogen hat.

Die Erfindung wird nachfolgend mit bezug auf die Behandlung der Euter von Kühen beschrieben. Es sei aber darauf hingewiesen, dass die Erfindung bei allen Tieren eingesetzt werden kann, die Milch abgeben. Insbesondere ist die erfindungsgemäße Behandlungsvorrichtung - in entsprechender konstruktiver Größenanpassung - zur Behandlung der Euter von Kühen, Schafen, Ziegen, Pferden, Eseln, Kamelen, Lamas und Dromedaren, Elchen, Rentieren und Büffeln und sonstigen Säugetieren geeignet. Die Behandlung kann vor und/oder nach dem Melken erfolgen.

Mit der erfindungsgemäßen Vorrichtung ist es somit möglich, eine für das Tier schmerzhafte Kollision der Behandlungseinrichtung beim Vorfahren in die Wirk- oder Endlage zu verhindern. Für das Tier schmerzhafte Kollisionen mit der Einrichtung bzw. dem Träger werden hierdurch vermieden. In gleicher Weise wird die Behandlungseinrichtung geschont, da keine starken unvorhergesehenen Stöße auf die Einrichtung bzw. den Träger und dessen Antriebseinheit einwirken.

In einer bevorzugten Weiterbildung ist der Träger in einer ersten Richtung und wenigstens in einer zweiten Richtung auf das zu melkende Tier und insbesondere das zu behandelnde Euter zubewegbar ausgestaltet. Vorzugsweise ist die zweite Bewegungsrichtung im wesentlichen senkrecht zu der ersten Bewegungsrichtung.

Eine derartige Positionierung ermöglicht eine gezielte Anlage der Einrichtung an das Euter des zu behandelnden Tieres. Es ergibt sich, dass die Behandlungseinrichtung eine auf die zu behandelnden Euter angepasste Größe haben kann, wodurch das spätere Reinigen und Desinfizieren der Behandlungseinrichtung zwischen einzelnen Behandlungsvorgängen an den zu behandelnden Tieren vereinfacht wird.

Bei vielen Melkanlagen durchlaufen die zu melkenden Tiere einen Gang, in dem sie zunächst zum Melken vorbehandelt werden, um zum Melkplatz zu gelangen. Hierunter versteht man insbesondere das Reinigen und/oder das Desinfizieren des Euters vor dem Anlegen eines Melkzeuges. Nach der Reinigung wird das Euter stimuliert, um das Melken vorzubereiten. Die erfindungsgemäße Vorrichtung kann sowohl zur Reinigung als auch zur Stimulierung oder zu beidem eingesetzt werden.

Nach dem Melken wird das Euter in der Regel nachbehandelt, indem das Euter desinfiziert und/oder gepflegt wird. Auch für derartige Pflegebehandlungen kann eine erfindungsgemäße Vorrichtung bzw. das erfindungsgemäße Verfahren vorgesehen und angepasst sein. Bei einer Pflegebehandlung wie z.B. dem sogenannten Dippen wird ein Desinfektions- und Pflegemittel auf die Zitzen aufgetragen, indem die Zitzen in das Pflegemittel eingetaucht werden. Solche Pflegemittel können aber auch aufgesprüht werden. Zur Pflege können die Behandlungsmittel auch Stoffe wie Lanolyn oder Glycerin oder dergleichen enthalten.

In einer bevorzugten Ausgestaltung aller zuvor beschriebenen Ausgestaltungen ist mit dem Sensor ein die Bewegung in wenigstens einer Richtung behinderndes Hindernis erkennbar. Bevorzugt ist ein Hindernis in der ersten und wenigstens der zweiten Richtung erkennbar. Während der Zustellung der Einrichtung in die Endlage in einem orthogonalen Koordinatensystem kann dann sowohl die Bewegung in der ersten Richtung als auch die Bewegung in der zweiten Richtung erforderlichenfalls gestoppt werden, wenn sich bei der Zustellbewegung ein Hindernis in den Weg stellt. Bei einer dreidimensionalen Verfahrbarkeit der Behandlungseinrichtung entlang dreier z.B. orthogonaler Achsen ist auch eine Hinderniserkennung in drei Dimensionen möglich und bevorzugt.

Zur Vermeidung von Tritten der Tiere, deren Euter gereinigt werden sollen, gegen die Behandlungseinrichtung hat es sich als vorteilhaft herausgestellt, die Auswerteeinrichtung derart auf die Antriebseinheit einwirkend auszubilden, dass beim Empfang eines das Vorhandensein des Hindernisses anzeigenden Signals die Bewegungsrichtung der Antriebseinrichtung des Trägers wenigstens für eine kurze und z.B. vordefinierte Zeitdauer oder Wegstrecke umgedreht wird. Hierdurch wird der Träger bzw. die Einrichtung aus der Reichweite des tretenden Tierbeines herausgefahren, wodurch übermäßige Stoßbeanspruchungen und gegebenenfalls Zerstörungen an der Vorrichtung oder anderen melktechnischen Komponenten verhindert werden können.

Der Sensor kann ein berührungsfreier Sensor sein, welcher z.B. an dem Träger oder der Einrichtung befestigt ist. Ein solcher berührungsfreie Sensor kann z.B. ein optischer oder ein Ultraschall-Sensor sein. Ebenso können Sensoren vorgesehen sein, die elektrische Größen wie Strom, Spannung, Kapazität, Induktivität oder dergleichen messen. Ebenso sind Drehzahl- oder Drehmomentsensoren oder Vorschubsüberwachungssensoren für den Antriebsmotor oder dergleichen möglich. Auch mehrere gleichartige oder unterschiedliche Sensoren, die auch nach physikalisch unterschiedlichen Meßmethoden arbeiten, können verwendet werden.

Im Hinblick auf die Reinigung und Desinfizierung der Behandlungseinrichtung zwischen einzelnen Reinigungsschritten an den zu melkenden Tieren ist es zu bevorzugen, dass unmittelbar am vorderen Ende des Trägers bzw. an der Behandlungseinrichtung nur ein Sensor vorgesehen wird, der nicht oder nur geringe Gefahr läuft, häufig zu verschmutzen oder bei stärkerer Beanspruchung zu versagen.

Im Hinblick darauf wird mit der vorliegenden Erfindung ein Sensor vorgeschlagen, der ein Signal abgibt, wenn die Einrichtung auf ein Hindernis auftrifft. Dieser Sensor kann beispielsweise dadurch gebildet sein, dass das Drehmoment eines Antriebsmotors der Antriebseinheit überwacht wird, um bei einem plötzlichen Ansteigen des Drehmomentes bei der Bewegung von der Ausgangslage in die Wirklage auf ein Auftreffen des Trägers bzw. der Einrichtung auf ein Hindernis zu schließen. Eine Reaktion (Auswertung und Einwirkung) darauf erfolgt im allgemeinen derart schnell, dass es nicht zu einem für das Tier "schmerzhaften" Zusammenstoß kommt. Auch wenn bei diesen Verfahren ein Kontakt der Vorrichtung mit dem Tier nicht verhindert wird, so wirkt die Auswerteeinrichtung auf die Antriebseinrichtung doch jedenfalls derart ein, dass eine für das Tier schmerzhafte Kollision verhindert wird.

Beispielsweise kann zur Auswertung die Größe des Drehmoments an sich verwendet werden. Auch erste oder auch zweite Ableitungen im mathematischen Sinne des gemessenen Drehmomentes oder dergleichen eventuell in Verbindung mit der absoluten Größe des Messwertes können zur Auswertung herangezogen werden. So kann die Steigung des Drehmomentenverlaufes oder eine andere geeignete Größe zeitlich überwacht werden, und ein Alarmsignal ausgegeben werden, wenn eine solche Größe ein vorgegebenes Maß überschreitet. Auch die Änderung der Steigung des Drehmomentenverlaufes eignet sich zur Auswertung, da diese plötzliche Änderungen besonders stark sichtbar macht, wie es Stöße oder Kollisionen hervorrufen können.

Weiterhin kann bei der Auswertung auch die momentane Position der Behandlungseinrichtung oder des Trägers berücksichtigt werden, so dass die Höhe des Schwellwertes oder der Schwellwertbereich an die aktuelle Position angepasst wird. In Ortsbereichen, wo Kollisionen wahrscheinlicher sind kann die Schwelle entsprechend angepasst werden. Auch zeitliche Anpassungen sind möglich. So können direkt beim Anfahren aus dem Stand oder beim Beschleunigen der Vorrichtung andere (z.B. höhere) Schwellwerte berücksichtigt werden.

Gemäß einer bevorzugten Weiterbildung umfasst die Antriebseinrichtung wenigstens einen hydraulischen oder pneumatischen Zylinder, wobei der zumindest eine Sensor durch einen den Fluiddruck einer Zylinderkammer überwachenden Drucksensor gebildet ist. Diese Ausgestaltung geht von der Erkenntnis aus, dass sich bei einem pneumatischen oder hydraulischen Antriebszylinder der Kammerdruck plötzlich ändert, wenn der Träger bzw. die Einrichtung beim Vorfahren in die Endlage auf ein Hindernis aufstoßen.

Eine besonders einfache und zuverlässige Weiterbildung wird dadurch geschaffen, dass der Drucksensor zwischen der Druckkammer und einer Drossel angeordnet ist, die sich in einem Auslasskanal der Druckkammer für das Fluid befindet. Hierbei wird insbesondere daran gedacht, die Druckverhältnisse in der jeweils nicht angesteuerten Druckkammer zu überprüfen, d.h. diejenige Druckkammer hinsichtlich ihres Druckes zu überprüfen, aus welcher das Fluid bei der Bewegung des Druckzylinders austritt, während die jeweils andere Kammer mit Druck beaufschlagt wird. Das aus dieser nicht angesteuerten Kammer abfließende Fluid erfährt aufgrund der Drossel eine Druckerhöhung. Der zwischen der Drossel und der Druckkammer anliegende Druck wird überwacht. Dieser Druck fällt bei der Kollision mit einem Hindernis ab.

Dieses Ereignis wird durch den Drucksensor festgestellt und in Form eines das Hindernis anzeigenden Signals an die Auswerteeinrichtung weitergegeben. Als hydraulische oder pneumatische Zylinder werden vorzugsweise doppeltwirkende Druckzylinder verwendet. Ein Drucksensor der vorher diskutierten Art kann jeder der beiden Druckkammern zugeordnet sein, um auf das Auftreten eines Hindernisses sowohl bei der Bewegung von der Ausgangslage in die Endlage reagieren zu können als auch bei einer Bewegung in umgekehrter Richtung.

Zur Vereinfachung der Vorrichtung wird gemäß einer weiteren bevorzugten Ausgestaltung der vorliegenden Erfindung vorgeschlagen, dass ein das Vorhandensein der Einrichtung in der Endlage erkennender Endlagensensor vorgesehen ist, dessen Endlagensignal von der Auswerteeinrichtung empfangen wird und dass die Auswerteeinrichtung derart vorbereitet ist, dass die Antriebseinrichtung des Trägers beim Empfang das Vorhandensein eines Hindernisses anzeigenden Signals oder beim Empfang des Endlagensignals umgedreht wird. Bei dieser bevorzugten Ausgestaltung bedient sich die Auswerteeinrichtung der bereits im Stand der Technik vorgesehenen Schaltung, die eine automatisierte Rückstellung der Einrichtung - ggf. mit Zeitverzögerung - nach Erreichen der Endlage bewirkt.

Im Hinblick auf eine einfache Kinematik der Einrichtung wird gemäß einer weiteren bevorzugten Ausgestaltung der vorliegenden Erfindung vorgeschlagen, dass die Auswerteeinrichtung derart vorbereitet ist, dass die Einrichtung zunächst in die erste Richtung bewegt wird, bis die Einrichtung die Wirklage hinsichtlich der ersten Richtungskoordinate erreicht hat. Anschließend wird die Einrichtung in die zweite Richtung bewegt, bis die Einrichtung die Wirklage hinsichtlich der zweiten Richtungskoordinate und damit die Wirk- oder Endlage insgesamt erreicht hat. Auch die gleichzeitige Bewegung in mehreren Dimensionen ist möglich, um z.B. die Verfahrung in Wirklage zu beschleunigen.

Bei der Bewegung entlang der ersten Koordinatenachse wird die Einrichtung im wesentlichen rechtwinklig zu der Längserstreckung des zu behandelnden Tieres bewegt, und zwar so weit, bis die Einrichtung in etwa mittig unter dem Tier platziert ist. In dieser Position besteht die größte Wahrscheinlichkeit, dass bei einer Bewegung in Längsrichtung des zu behandelnden Tieres, d.h. auf der zweiten Koordinatenachse, die Einrichtung in Richtung auf das zu behandelnde Euter verfahren werden kann, ohne dass eine Kollision mit den Beinen des Tieres eintritt.

Gemäß einer weiteren bevorzugten Ausgestaltung der vorliegenden Erfindung ist wenigstens einem Sensor wenigstens eine Schwellwerteinstelleinrichtung zugeordnet. Hierdurch ist insbesondere im Falle einer Ausgestaltung eines auf Berührung wirkenden Sensors die Möglichkeit geschaffen, beim Anstoßen mit geringem Impuls gegen ein Tierbein mit der Bewegung der Einrichtung direkt oder auch zeitversetzt fortzufahren, wenn das Tierbein als Reaktion auf den Stoß von dem Tier aus dem Verfahrweg der Einrichtung genommen wird.

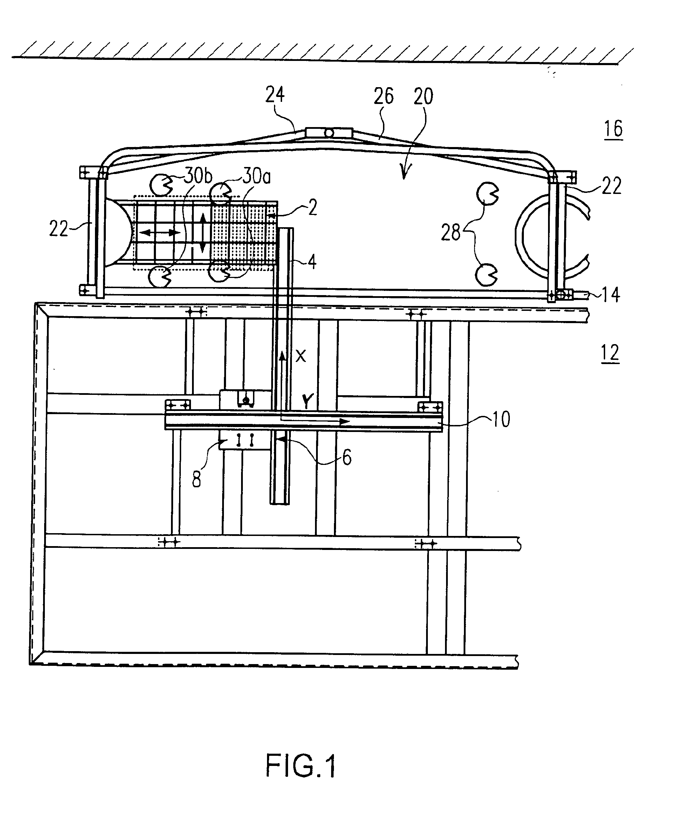

Die vorliegende Erfindung wird anhand eines Ausführungsbeispiels einer Reinigungseinrichtung als Behandlungseinrichtung in Verbindung mit der Zeichnung nachfolgend erläutert. In der Zeichnung ist eine schematisierte Draufsicht auf einen Melkstand gezeigt.

Bei dem in der Figur gezeigten Ausführungsbeispiel handelt es sich um eine Reinigungsstation eines Melkstandes, wie er beispielsweise aus dem DE-U-295 10 417 bekannt ist. Dieser Melkstand weist mehrere in Laufrichtung der zu melkenden Tiere, hier Kühe, hintereinander angeordnete Boxen auf. In der ersten Box befindet sich die Reinigungsstation. In den nachfolgenden Boxen wird jeweils ein Melkzeug an eine zu melkende Kuh angelegt.

Das gezeigte Ausführungsbeispiel verdeutlicht lediglich eine Reinigungsstation. Ebenso kann erfindungsgemäß auch eine sonstige Behandlungseinrichtung vorgesehen sein. Insbesondere Stimulierungs-, Desinfektions- und Nachbehandlungseinrichtungen zur Pflege und/oder Desinfektion können erfindungsgemäß verwirklicht werden.

Bei dem gezeigten Ausführungsbeispiel ist eine rotierend angetriebene Bürste 2 an dem freien Ende eines Trägers 4 der Reinigungseinrichtung drehbar gelagert. Der Träger 4 ist in einer ersten Führung 6 längsverschieblich gelagert. Diese erste Führung 6 wird wiederum als querverschieblich quer zu der Führungsrichtung der ersten Führung 6 in einer zweiten Führung 8 geführt, welche entlang einer ortsfesten Schiene 10 läuft.

Durch diese Ausgestaltung kann die Bürste 2 in einem orthogonalen Koordinatensystem bewegt werden, wobei die erste Führung 6 eine Bewegung in X-Richtung erlaubt und die zweite Führung 8 eine Bewegung in Y-Richtung, wobei die durch die X-Richtung und die Y-Richtung aufgespannte Ebene im wesentlichen parallel zum Boden ausgerichtet ist. Darüber hinaus kann durch ein Verschwenken des Trägers 4 bzw. eine lineare Verschiebung aus der Zeichenebene heraus die Bürste 2 auch in Z-Richtung verfahrbar sein.

Die Führungen 6, 8 sowie die Schiene 10 befinden sich in einem Technikraum 12, welcher über ein Sperrgitter 14 von einem Gang 16 für die Kühe getrennt ist. Eine die Kühe in der Reinigungsstation aufnehmende Box 20 hat an ihrer vorderen und an ihrer hinteren Stirnseite weitere Gitter 22 und an seiner dem Technikraum 12 abgewandten Längsseite zwei verschwenkbar gelagerte und automatisch angesteuerte Ein- und Auslasstüren 24, 26.

In der Box 20 sind schematisch sechs Fußabdrücke einer zu melkenden Kuh gezeigt. Es handelt sich hierbei um die vorderen Hufpaare 28 eines großen und eines kleinen Tieres sowie die hinteren Hufpaare 30a eines kleinen Tieres und 30b eines großen Tieres.

Ein sich in dem Gang 16 befindendes zu melkendes Tier gelangt durch die geöffnete Einlasstür 24 zunächst in die Box 20. Die Einlasstür 24 schließt sich automatisch. Unabhängig von der Größe des Tieres fährt danach die sich zunächst in einer Ausgangslage innerhalb des Technikraumes 12 befindliche Bürste durch das Sperrgitter 12 in die Box 20 in X-Richtung, bis die Endlage hinsichtlich der X-Koordinate erreicht ist.

Bei dem gezeigten Ausführungsbeispiel befindet sich die rotierende Bürste 2 seitlich neben dem Träger 8. Insofern ist es wahrscheinlich, dass eine eventuelle Kollision mit einem Tierbein beim Verfahren der rotierenden Bürste 2 in der Box 20 durch die Bürste 2, nicht aber den Träger 4 verursacht wird.

Sobald die Reinigungsstellung hinsichtlich der X-Koordinate erreicht ist, fährt der Träger 4 zusammen mit der Bürste 2 entlang der Längserstreckung der Schiene 10 in Y-Richtung, bis die Reinigungsstellung hinsichtlich der Y-Richtungskoordinate und somit die Endlage erreicht ist. Diese kann variabel sein und beispielsweise durch eine Einrichtung ermittelt werden, wie sie aus der DE-A-199 01 241 zur groben Positionierung des Melkzeuges unterhalb des Euters einer Kuh bekannt ist.

Bei den in dem Ausführungsbeispiel gezeigten ersten und zweiten Führungen 6, 8 handelt es sich um herkömmliche Nutenführungen. Der Antrieb erfolgt jeweils über einen hier nicht dargestellten Antriebsmotor, dessen Antriebsrad einerseits auf den Träger 2 und andererseits auf die Schiene 10 wirkt. Das Drehmoment der jeweiligen Motoren wird überwacht. Das entsprechende Signal wird einer hier nicht dargestellten Auswerteeinrichtung zugeleitet.

Stößt die Bürste 2 beim Verfahren von der Ausgangslage in die Endlage beispielsweise gegen das Bein einer in der Box 20 stehenden Kuh, so steigt das Drehmoment des Antriebsmotors unvermittelt stark kann, was die Auswerteeinrichtung erkennt. Diese wirkt auf den betreffenden Antriebsmotor derart ein, dass der Motor gestoppt und gegebenenfalls in umgekehrter Richtung angetrieben wird.

### Bezugszeichenliste

- 2: Bürste
- 4: Träger
- 6: Erste Führung
- 8: Zweite Führung
- 10: Schiene
- 12: Technikraum
- 14: Sperrgitter
- 16: Gang
- 20: Box
- 22: Gitter
- 24: Einlasstür
- 26: Auslasstür
- 28: Vorderes Hufpaar
- 30a: Hinteres Hufpaar, kleines Tier
- 30b: Hinteres Hufpaar, großes Tier

## Patentansprüche

1. Vorrichtung zum Behandeln eines Euters eines zu melkenden Tieres mit wenigstens einer Behandlungseinrichtung,
einem die Behandlungseinrichtung tragenden Träger (4) und wenigstens einer auf den Träger (4) wirkenden Antriebseinrichtung,
wobei die Behandlungseinrichtung mit dem Träger (4) von einer Ausgangslage in eine Wirklage, in welcher die Behandlungseinrichtung wirksam ist, bewegbar ist, **gekennzeichnet durch**
wenigstens einen Sensor, welcher ein die Bewegung des Trägers (4) zwischen der Ausgangslage und der Endlage behinderndes Hindernis erkennt und ein das Vorhandensein des Hindernisses anzeigendes Signal abgibt, sowie
eine das Signal empfangende Auswerteeinrichtung, die auf die Antriebseinrichtung einwirkt.

2. Vorrichtung nach Anspruch 1, **dadurch gekennzeichnet,**
**dass** die Behandlungseinrichtung zum Reinigen, Pflegen und/oder Desinfizieren des Euters geeignet ist.

3. Vorrichtung nach Anspruch 1 oder 2, **dadurch gekennzeichnet,**
**dass** die Behandlungseinrichtung zur Nachbehandlung nach dem Melken geeignet ist.

4. Vorrichtung nach mindestens einem der Ansprüche 1 bis 3,
**dadurch gekennzeichnet,**
**dass** wenigstens ein Sensor ein elektrischer Sensor ist, welcher wenigstens einen Spannungs- oder Stromwert aufnimmt, welcher charakteristisch für einen Widerstand gegen die Bewegung des Trägers (4) ist.

5. Vorrichtung nach mindestens einem der vorhergehenden Ansprüche,
**dadurch gekennzeichnet,**
**dass** der Träger (4) in einer ersten Richtung (X) und in einer zweiten, zu der ersten im wesentlichen rechtwinkligen Richtung (Y) verfahrbar ist, und dass mit dem wenigstens einen Sensor eine die Bewegung in der ersten und/oder der zweiten Richtung behinderndes Hindernis erkennbar ist.

6. Vorrichtung nach mindestens einem der vorhergehenden Ansprüche,
**dadurch gekennzeichnet,**
**dass** die Auswerteeinrichtung derart auf die Antriebseinrichtung einwirkt, dass beim Empfang des das Vorhandensein eines Hindernisses erzeugenden Signals die Antriebseinrichtung des Trägers (4) gestoppt oder die Antriebsrichtung umgedreht wird.

7. Vorrichtung nach mindestens einem der vorhergehenden Ansprüche,
**dadurch gekennzeichnet,**
**dass** der Sensor ein das Auftreffen auf ein Hindernis anzeigendes Signal abgibt.

8. Vorrichtung nach mindestens einem der vorhergehenden Ansprüche,
**dadurch gekennzeichnet,**
**dass** die Antriebseinrichtung einen hydraulischen oder pneumatischen Zylinder umfasst und dass der zumindest eine Sensor durch einen den Fluiddruck einer Zylinderkammer des Zylinders überwachenden Drucksensor gebildet ist.

9. Vorrichtung nach Anspruch 8, **dadurch gekennzeichnet,**
**dass** der Drucksensor zwischen der Druckkammer und einer Drossel angeordnet ist, die in einem Auslasskanal der Druckkammer für das Fluid befindlich ist.

10. Vorrichtung nach mindestens einem der vorhergehenden Ansprüche,
**dadurch gekennzeichnet,**
**dass** ein das Vorhandensein der Einrichtung (2) in der Endlage erkennender Endlagensensor vorgesehen ist, dessen Endlagensignal von der Auswerteeinrichtung empfangen wird, und dass die Auswerteeinrichtung derart vorbereitet ist, dass die Antriebsrichtung des Trägers (4) beim Empfang des das Vorhandensein eines Hindernisses anzeigenden Signals oder beim Empfang des Endlagensignals gestoppt oder umgedreht wird.

11. Vorrichtung nach mindestens einem der Ansprüche 1 bis 10,
**dadurch gekennzeichnet,**
**dass** die Auswerteeinrichtung derart vorbereitet ist, dass die Einrichtung (2) zunächst in die erste Richtung bewegt wird, bis die Einrichtung (2) die Endlage hinsichtlich der ersten Richtungskoordinate (X) erreicht hat, und dass die Einrichtung (2) dann in die zweite Richtung bewegt wird, bis die Einrichtung (2) die Endlage hinsichtlich der ersten und einer zweiten Richtungskoordinate (X, Y) erreicht hat.

12. Vorrichtung nach mindestens einem der vorherigen Ansprüche,
**dadurch gekennzeichnet,**
**dass** dem Sensor eine Schwellwerteinstelleinrichtung zugeordnet ist.

13. Verfahren zum Behandeln eines Euters eines zu melkenden Tieres mit
einem eine Behandlungseinrichtung tragenden Träger (4), wobei die Behandlungseinrichtung mittels einer Antriebseinrichtung von einer Ausgangslage in eine Wirklage verfahren wird, in welcher die Behandlungseinrichtung das Euter des zu melkenden Tieres behandelt,
**dadurch gekennzeichnet,**
**dass** wenigstens ein Sensor das Vorhandensein eines Hindernisses der Bewegung des Trägers (4) zwischen der Ausgangslage und der Wirklage anzeigt und ein Signal abgibt, welche das Vorhandensein des Hindernisses anzeigt, und
eine Auswerteeinrichtung, welche das Signal empfängt und auswertet und auf die Antriebseinrichtung einwirkt.

14. Verfahren nach Anspruch 13, **dadurch gekennzeichnet,**
**dass** der Sensor ein elektrisches Signal erfasst, welches charakteristisch für eine Leistungsaufnahme oder ein Drehmoment der Antriebseinrichtung ist.

15. Verfahren nach Anspruch 13 oder 14, **dadurch gekennzeichnet,**
**dass** der Sensor eine Betriebsspannung und/oder einen Betriebsstrom der Antriebseinrichtung erfasst und dass daraus auf das Vorhandensein eines Hindernisses geschlossen wird.

16. Verfahren nach mindestens einem der Ansprüche 13 bis 15,
**dadurch gekennzeichnet,**
**dass** wenigstens eine zeitliche Änderung des Sensorsignals erfasst wird und daraus auf das Vorhandensein eines Hindernisses geschlossen wird und dass bei Überschreiten eines Schwellwertes auf die Antriebseinrichtung eingewirkt wird.
